(19) Europäisches Patentamt
European Patent Office
Office européen des brevets

(11) **EP 2 457 315 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(51) Int Cl.:
***H02M 1/42*** *(2007.01)*

(21) Anmeldenummer: **10734079.6**

(22) Anmeldetag: **07.07.2010**

(86) Internationale Anmeldenummer:
**PCT/EP2010/059702**

(87) Internationale Veröffentlichungsnummer:
**WO 2011/009719 (27.01.2011 Gazette 2011/04)**

(54) **VERFAHREN UND SCHALTUNG ZUR LEISTUNGSFAKTOR-KORREKTUR**

METHOD AND CIRCUIT FOR CORRECTING POWER FACTOR

PROCÉDÉ ET CIRCUIT DE CORRECTION DU FACTEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009 DE 102009034349**

(43) Veröffentlichungstag der Anmeldung:
**30.05.2012 Patentblatt 2012/22**

(73) Patentinhaber: **Tridonic GmbH & Co KG**
**6851 Dornbirn (AT)**

(72) Erfinder:
• **MARENT, Günter**
**A-6780 Bartholomäberg (AT)**
• **KELLY, Jamie**
**Tyne and Wear NE 29 8AH (GB)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**EP-A1- 1 603 219       EP-A2- 1 018 798**
**US-A1- 2005 083 022    US-B1- 6 304 465**

**Beschreibung**

Die vorliegende Erfindung bezieht sich auf ein Verfahren sowie eine Vorrichtung zur aktiven Leistungsfaktorkorrektur (PFC, Power Factor Correction), d.h. mittels eines aktiv von einer Steuereinheit getakteten Schalters.

Das technische Gebiet der vorliegenden Erfindung ist insbesondere das der Leistungsfaktorkorrektur bei Wechselspannungs-/Gleichspannungs-Leistungswandler.

Durch eine Leistungsfaktorkorrektur wird die Art beeinflusst, wie elektrische Geräte Strom dem Stromnetz entnehmen. Die Netzwechselspannung weist bekanntlich einen sinusförmigen Zeitverlauf auf. Idealerweise sollte daher auch der vom Netz entnommene Strom ebenfalls einen sinusförmigen Zeitverlauf aufweisen. Dieser Idealfall kommt aber nicht immer vor, vielmehr kann der Strom sogar erheblich von einer Sinus-Hüllkurve abweichen. Falls der entnommene Strom nicht sinusförmig ist, werden indessen Oberwellen im Netzstrom erzeugt. Diese Oberwellenströme im Versorgungsnetz sollen mit Hilfe einer Leistungsfaktorkorrektur-Schaltung verringert werden.

Nach der DE 10 2004 025 597 A1 ist eine Schaltung zur eine Leistungsfaktor bekannt, bei der die Induktivität wiederholt mittels eines durch eine Steuereinheit getakteten Schalters durch Schließen und Öffnen desselben ge- und entladen wird, und bei der der Entladestrom der Induktivität über eine Diode (D) dem Ausgang des Wandlers zugeführt wird. Die als ASIC ausgeführte Steuereinheit weist nur zwei PINs auf. Über einen der PINs werden Steuersignale ausgegeben und an dem anderen PIN werden Parameter überwacht, die zur Bemessung der Ein- und Ausschaltzeit für den Schalter notwendig sind. Dabei erfolgt das Wiedereinschalten des Schalters am Ende einer Ausschaltzeit dann, wenn der Entladestrom durch die Induktivität die Nulllinie erreicht hat. Dieser Zeitpunkt wird durch Überwachung der Spannung an der Hochpotentialseite des Schalters ermittelt und mittels eines Spannungsteilers gemessen, der parallel zum Schalter liegt. Der Abgriffspunkt des Spannungsteilers ist mit dem Überwachungs-PIN verbunden. Die überwachte Spannung knickt in ihrem zeitlichen Verlauf nach unten ab, wenn der Entladestrom die Nulllinie erreicht.

Der Erfindung liegt die Aufgabe zugrunde, ein Verfahren und eine Schaltung zur Leistungsfaktor-Korrektur mit einer alternativen Möglichkeit zur Bemessung der Ausschaltzeit anzugeben und dazu ebenfalls nicht mehr als einen Überwachungs-PIN bzw. nur einen gemeinsamen Messpunkt für die Überwachung von Systemparametern zu benötigen.

Die Aufgabe ist für das Verfahren durch die Merkmalskombinationen dem unabhängigen Anspruch 1 und für die Schaltung durch die unabhängigen Anspruch 9 gelöst.

Die Lösung besteht für das Verfahren - vereinfacht gesagt - darin, dass an dem einzigen Überwachungs-PIN gemessen werden

- bei geöffnetem Schalter, eine Spannung, die der Ausgangsspannung des Wandlers entspricht, und
- bei geschlossenem Schalter eine Spannung, die der Zeit entspricht, welche vom Zeitpunkt des Schließens des Schalters vergeht, bis der Schalterstrom einen vorgegeben Schwellenwert erreicht hat,

und dass die Ausschaltzeit für den Schalter unter Auswertung des Schwellenwertes, der Ausgangsspannung und der Einschaltzeit rechnerisch ermittelt wird.

Für die Schaltung besteht die Lösung - vereinfacht gesagt - darin, dass Messmittel vorgesehen sind, mittels welchen an dem einzigen Überwachungs-PIN gemessen werden

- bei geöffnetem Schalter, eine Spannung, die der Ausgangsspannung des Wandlers entspricht, und
- bei geschlossenem Schalter eine Spannung, die der Zeit entspricht, welche vom Zeitpunkt des Schließens des Schalters vergeht, bis der Schalterstrom einen vorgegeben Schwellenwert erreicht hat,

und dass Rechnermittel vorgesehen sind, mittels welchen die Ausschaltzeit für den Schalter unter Auswertung des Schwellenwertes, der Ausgangsspannung und der Einschaltzeit rechnerisch berechnet wird.

Ausgestaltungen der erfindungsgemäßen Lösungen sind Gegenstand der abhängigen Ansprüche. Zur Vermeidung von Wiederholungen sollen die die Ansprüche vollinhaltlich zum Offenbarungsgehalt der Beschreibung gerechnet werden.

Ein Ausführungsbeispiel wird nachfolgend anhand der Zeichnungen beschrieben.

Es zeigen:

Figur 1 ein schematisiertes Schaltbild einer Schaltung zur Leistungsfaktor-Korrektur in einem Wechselspannungs-/Gleichspannungs-Leistungswandler;

Figur 2 ein schematisiertes Blockschaltbild der Steuereinheit;

Figur 3 eine grafische Darstellung des Schalterstromes in Abhängigkeit von der Zeit, die die Bestimmung des Ausschaltzeitpunktes für den Schalter zeigt;

Figur 4 eine grafische Darstellung des Schalterstromes in Abhängigkeit von der Zeit, die eine Möglichkeit zur Phasensynchronisation einer gespeicherten einer Tabelle zeigt, welche die Schwellenwerte für den Ladestrom in Abhängigkeit von der Kurvenform der Eingangswechselspannung enthält.

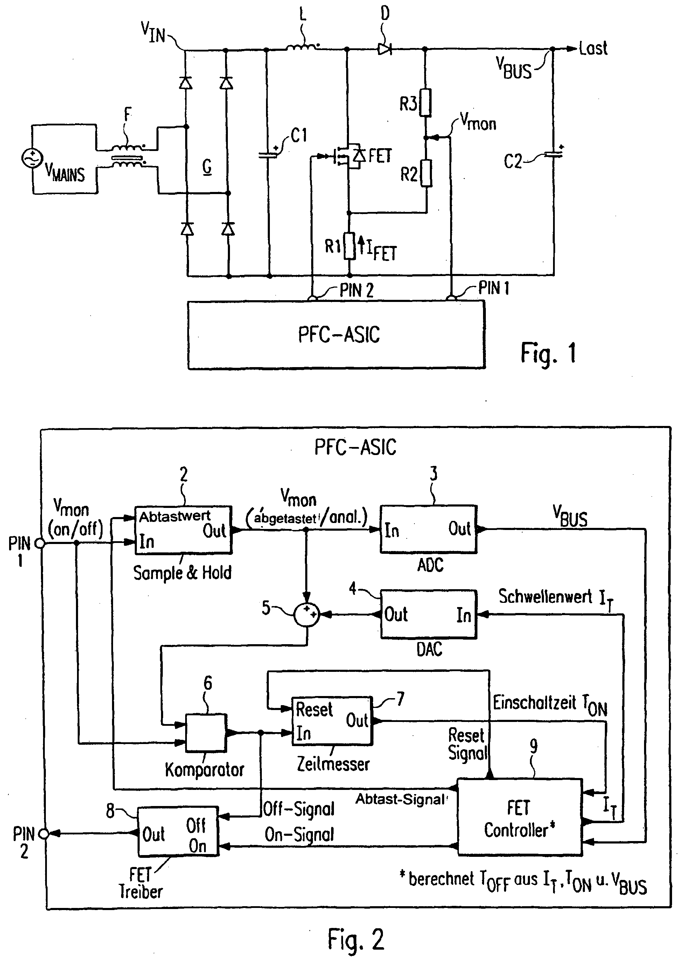

Die in Figur 1 gezeigte Schaltung zur Leistungskorrektur wird vom Netzt mit der sinusförmigen Netzspannung $V_{MINS}$ versorgt. Diese wird - nachdem sie ein passives Hochfrequenzfilter F passiert hat - einem Brückengleichrichter G zugeführt. Dadurch entsteht an dem Eingangskondensator C1 eine Spannung, die aus Sinushalbwellen gleicher Polarität besteht. Obwohl man sie auch als mehr oder weniger stark wellige Eingangsgleichspannung bezeichnen könnte, wird sie nachfolgende gerade wegen ihrer Welligkeit und der Notwendigkeit den Eingangsstrom an ihre Kurvenform anzupassen, als Eingangswechselspannung $V_{IN}$ bezeichnet.

Die Eingangswechselspannung $V_{IN}$ wird einer Serienschaltung aus einer Induktivität L, einem elektronischen Schalter in Form eines FET und einem Shuntwiderstand R1 zugeführt. Durch wiederholtes Schließen und Öffnen des Schalters bzw. dadurch dass der FET in ständiger Wiederholung getaktet wird, wird die Induktivität L entsprechend ge- und entladen.

Die Induktivität L ist über eine Diode D mit dem Ausgang der Schaltung verbunden, der durch die Ausgangskapazität C2 repräsentiert ist. Über dem Ausgang liegt die Last.

Parallel zum Ausgang der Schaltung liegt eine Serienschaltung von drei Widerständen R2, R3 und dem Shuntwiderstand R1. Der Widerstand R1 ist sehr klein, vor allem sehr viel kleiner als R2 und R3. Der Verbindungspunkt zwischen den beiden größeren Widerständen R2 und R3 ist ein gemeinsamer Messpunkt der Schaltung für die zur Steuerung notwendigen Parameter. Dieser gemeinsame Messpunkt ist mit dem einzigen Überwachungs-PIN PIN 1 einer als ASIC ausgeführten Steuereinheit PFC verbunden. Der ASIC weist noch einen zweiten PIN auf, der als PIN 2 bezeichnet ist und der Ausgabe von Steuerbefehlen dient. Im vorliegenden Fall ist PIN 2 mit dem Gate des FET verbunden und führt diesem die Taktsignale zu, also die Befehle zu schließen oder zu öffnen.

Die in Figur 2 in schematisierter Form gezeigte Steuereinheit PFC enthält einen FET Controller 9. In diesem ist eine (nicht dargestellte) Tabelle abgespeichert, in der eine Vielzahl von digitalisierten Schwellenwerten $I_T$ für den Ladestrom $I_{FET}$ in Abhängigkeit von der Eingangswechselspannung $V_{IN}$ niedergelegt ist. Der FET Controller 9 gibt diese Schwellewerte $I_T$ an einen DAC 4 aus, der sie analogisiert und einem Addierer 5 zuführt.

Die Steuereinheit PFC enthält ferner eine mit dem PIN 2 verbundene Sample&Hold-Schaltung 2, die ihre Sample-Befehle von dem FET Controller 9 erhält und die die von PIN 2 überwachte Spannung $V_{mon}$ abtastet und die Tastwerte(die noch analog sind) ebenfalls dem Addierer 5 zuführt. Der so erzeugte analoge Summenwert wird von dem Addierer 5 dem einen Eingang eines Komparators 6 zugeführt. Der andere Eingang des Komparators 6 ist mit dem PIN 2 verbunden. Der Ausgang des Komparators 6 ist mit einem Zeitmesser 7 verbunden.

Der FET Controller ist ferner über einen ADC 3 mit dem Ausgang der Sample&Hold-Schaltung 2 verbunden.

Nachfolgend wird die Funktion der Schaltung beschrieben. Dabei wird davon ausgegangen, dass die Schaltung bereits im Betrieb und eine Entladephase gerade beendet ist. Es soll nunmehr eine neue Ladephase für die Induktivität L eingeleitet werden.

Die neue Ladephase beginnt damit, dass der FET Controller 9 ein Einschaltsignal On an den FET Treiber gibt, die letzteren veranlasst, den FET über PIN 2 leitend zu schalten. Das hat zur Folge, dass durch die Induktivität L ein kontinuierlich ansteigender Ladestrom fließt und die Induktivität L magnetisch aufgeladen wird. Gleichzeitig wird die Diode D in den Sperrzustand geschaltet, d.h. sie ist dann hochohmig.

Wie oben bereits angedeutet, enthält der FET Controller eine (nicht gezeigte) abgespeicherte Tabelle mit Schwellenwerten für den Schalterstrom $I_{FET}$, die die Halbsinus-Kurven gleicher Polarität der Eingangswechselspannung $V_{IN}$ nachbilden. Dies gewährleistet, dass der Eingangstrom des PFC aus Stromimpulsen besteht, deren Einhüllende entsprechend sinusförmig ist, mit der Folge, dass Rückstrahlungen von Harmonischen der Stromimpulse in starkem Maße reduziert sind. Aus dieser Tabelle liest der FET Controller 9 zu Beginn der Ladephase aufgrund der zuletzt gemessenen und gespeicherten Einschaltzeit $T_{ON}$ den entsprechenden digitalen Schwellwert $I_T$ aus und sendet diesen an den ADC 4. Letzterer analogisiert den digitalen Schwellenwert $I_T$ und führt ihn dem Addierer 5 zu.

Ebenfalls zu Beginn der Ladephase erzeugt der FET Controller ein Reset-Signal mit dem er einen Zeitmesser 7 auf Null setzt. Der Zeitmesser 7 beginnt daraufhin mit einem neuen Lauf einer Zeitmessung für die Einschaltzeit $T_{ON}$.

Die an PIN 1 während der Ladephase liegende Spannung $V_{mon}$ setzt sich aus zwei Komponenten zusammen, und zwar zum einen der von dem Schalterstrom $I_{EFT}$ (der hier gleich dem Ladestrom ist) verursachten ansteigenden Spannung an R1 und der weitgehend konstanten Spannung $U_{BUS}$ an den in Serie geschalteten Widerständen R1+R2+R3. Um nun die Zeit $T_{ON}$ zu messen, die der Ladestrom braucht, um von Null bis auf den Schwellenwert $I_T$ zu steigen, muss der von $U_{BUS}$ verursachte Spannungsanteil eliminiert werden. Wie dies erreicht wird, wird etwas später erklärt.

$V_{mon}$ wird dem Signal-Eingang der Sample&Hold-Schaltung 2 sowohl während der Lade- als auch während der Entladephase zugeführt. Während er Entladephase repräsentiert $V_{mon}$ die Ausgangsgleichspannung $U_{BUS}$, da wegen des dann nichtleitenden FET die durch den Schalterstrom $I_{EFT}$ verursachte Spannung an R1 entfällt. Die Sample&Hold-Schaltung 2 zerlegt $V_{mon}$ in aufeinanderfolgende Tastimpulse steigender Amplitude. Diese Tastimpulse werden in dem ADC 3 digitalisiert und dem FET Controller 9 während der Entladephase als digitale Ausgangsgleichspannung $V_{BUS}$ zugeführt. Dort wird $V_{BUS}$ angespeichert.

Der FET Controller 9 kennt demnach auch während einer Ladephase den zuletzt gespeicherten Wert für $V_{BUS}$. Er erhöht den aus der Tabelle entnommenen Schwellenwerte $I_T$ um einen $V_{BUS}$ entsprechenden Betrag und führt sie dem Addierer 5 zu. Der Addierer 5 summiert während der Ladephase den aktuellen Wert von $V_{mon}$ (der einen $V_{BUS}$ entsprechenden Anteil enthält) und den zuletzt getasteten und gespeicherten Wert von $V_{mon}$ und den analogisierten Schwellenwert $I_T$ (der um einen $V_{BUS}$ entsprechenden Betrag erhöht ist). Das so gebildete analoge Summensignal wird dem einen Eingang des Komparators 6 zugeführt. Dem anderen Eingang des Komparators 6 wird die aktuelle an PIN 1 anliegende analoge Spannung $V_{mon}$ zugeführt, die ebenfalls einen Anteil von $V_{BUS}$ enthält. Der Komparator 6 subtrahiert die beiden Komponenten, wobei - wie oben angedeutet - der Anteil von $V_{BUS}$ eliminiert wird. Im Ergebnis gibt der Komparator 6 ein Ausschaltsignal Off an den FET Treiber 8, wenn der Schalterstrom $I_{EFT}$ den Schwellenwert $I_T$ erreicht hat. Der Komparator 6 liefert das Ausschaltsignal Off außerdem an den Eingang des Zeitmessers 7, dessen Lauf damit gestoppt wird. Die gemessene Einschaltzeit $T_{ON}$ gibt der Zeitmesser 7 an den FET Controller 9 weiter. Der FET Controller kennt damit zwei für den weiteren Vorgang wichtige Parameter, nämlich $I_T$ und $T_{ON}$. Die Ladephase ist nunmehr beendet.

In der jetzt beginnenden Entladephase wird die Diode D leitend, also niederohmig. Von der Induktivität L fließt ein kontinuierlich abnehmender Entladestrom über die Diode D zur Last.

Es ist nunmehr notwendig, den Zeitpunkt zu bestimmen, an dem die Entladephase beendet und eine neue Ladephase eingeleitet werden soll. Das ist normalerweise dann der Fall, wenn der Entladestrom die Nulllinie berührt bzw. kreuzt. Der Entladestrom wird jedoch im vorliegenden Fall weder direkt noch indirekt überwacht; die Ermittlung der Ausschaltzeit $T_{OFF}$ erfolgt auf rechnerischem Weg und zwar wie folgt:

Aus den bereits oben erwähnten Parametern $I_T$ und $T_{ON}$ berechnet der FET Controller zunächst die Polarität Eingangswechselspannung $V_{IN}$ nach der Formel:

$$V_{IN} = L \cdot I_T / T_{ON}$$

Für die Ausschaltzeit $T_{OFF}$, an deren Ende ein neuer Einschaltzeitpunkt steht, gilt

$$T_{OFF} = L \cdot I_T / (V_{BUS} - V_{IN})$$

Nachdem $V_{IN}$ bereits ermittelt wurde, fehlt noch der Parameter $V_{BUS}$. Zu dieser ist folgendes zu bemerken:

Während der Entladephase (FET ist nichtleitend) ist die Spannungsabfall über R1 vernachlässigbar, das R1 ein sehr kleiner Widerstand sein soll, der lediglich zur Überwachung des Stromes $I_{FET}$ dient. Die an PIN 1 liegende Spannung $V_{mon}$ ist etwa gleich der um den Teilungsfaktor R2/R2+R3 reduzierten Ausgangsgleichspannung $V_{BUS}$. Damit steht auch $V_{BUS}$ für die Berechnung von $T_{OFF}$ zur Verfügung.

Am Ende der gemäß der vorstehenden Formeln berechneten Ausschaltzeit $T_{OFF}$ führt der FET Controller 9 dem FET Treiber wieder ein Einschaltsignal On zu, und damit beginnt der vorstehend beschriebene Zyklus erneut.

Wie oben beschrieben wurde, ist in dem FET Controller eine Tabelle gespeichert, in der die Schwellwerte $I_T$ in Abhängigkeit von den Amplituden der die Eingangswechselspannung bildenden Sinushalbwellen abgelegt sind. Diese Tabelle muss mit geänderten Verhältnissen, die die Eingangswechselspannung $V_{IN}$ betreffen, synchronisiert werden.

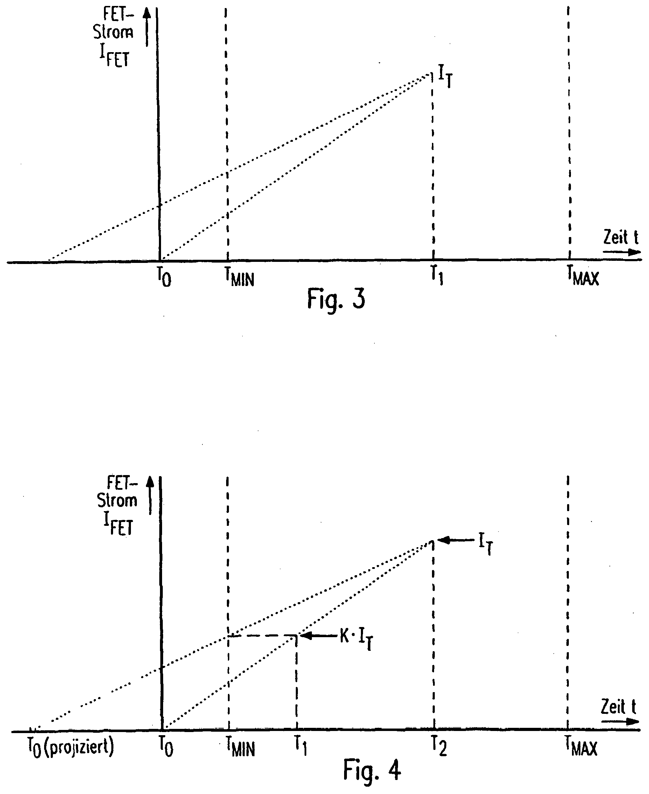

Aufgrund der indirekten Berechnung der Eingangswechselspannung $V_{IN}$ und daraus folgend der Ausschaltzeit $T_{OFF}$ kann eine Fehlerverkettung entstehen. Deshalb ist es zweckmäßig, wenn eine maximale Ausschaltzeit $T_{MAX}$ für $T_{OFF}$ und eine minimale Einschaltzeit $T_{MIN}$ für $T_{ON}$ festgelegt werden, wie dies in Figur 3 gezeigt ist. Dadurch kann vermieden werden, dass Störungen unverzüglich dazu führen, dass der FET ausschaltet, also sperrt. Durch die maximale Ausschaltzeit $T_{MAX}$ und die minimale Einschaltzeit $T_{MIN}$ ist es möglich, dass der Induktivitätsstrom (Ladestrom und Entladestrom) auch dann fließt, wenn die Spitzenamplitude von $V_{IN}$ nahe bei $V_{BUS}$ liegt.

Wenn die Eingangswechselspannung nahe Null ist, kann es sein, dass die Einschaltzeit $T_{ON}$ extrem lange lang sein muss, damit der Ladestrom den Schwellwert $I_T$ erreicht. Im normalen Betrieb sollte $T_{ON}$ aber keine Werte annehmen müssen, die wesentlich über denen bei Volllast liegen. Deshalb ist es zweckmäßig, eine Beschränkung vorzusehen, welche gewährleistet, dass der PFC Betrieb bei noch vertretbarer Frequenz (also mit noch zumutbar langen Einschaltzeiten) weitergeführt wird, selbst wenn dies - was den Strom betrifft - zu Unterschreitungen der normalerweise festgelegten Untergrenze führt.

Schließlich soll noch zu der Frage Stellung genommen werden, wie die Ausschaltzeit $T_{OFF}$ ermittelt werden kann, wenn der Strom $I_{FET}$ während der Ladephase zum Zeitpunkt des Einschaltens (leitend) des FETs nicht bei Null begonnen hat. Um dieses Problem zu lösen, wird unter Bezugnahme auf Figur 4 vorgeschlagen, zum Zeitpunkt T2 den aktuellen Schwellen wert $I_T$ und zum Zeitpunkt T1 einen Zwischenwert $K \cdot I_T$ zu messen. Aufgrund dieser Messungen lässt sich das Ansteigen des Induktivitätsstromes während der Einschaltphase berechnen und der virtuelle Nullwert entsprechend extrapolieren. Damit lässt sich für den Zeitpunkt T2 folgende korrigierte Einschaltzeit $T_{ON}$ berechnen:

$$T_{ON} = (T2-T1)/(1-K)$$

Mit der so korrigierten Einschaltzeit $T_{ON}$ ist eine Phasensynchronisation der oben erwähnten Tabelle möglich, gemäß der die Abhängigkeit der Schwellenwerte $I_T$ von der Halbsinus-Kurvenform der Eingangsspannung $V_{IN}$ vorgegeben wird.

**Patentansprüche**

1. Verfahren zur Leistungsfaktorkorrektur für einen Wechselspannungs-/Gleichspannungs-Wandler, bei dem eine Gleichspannung oder gleichgerichtete Eingangswechselspannung ($V_{IN}$) eine Induktivität (L) speist, bei dem die Induktivität (L) wiederholt mittels eines durch eine Steuereinheit (PFC) getakteten Schalters (FET) durch Schließen und Öffnen desselben ge- und entladen wird, bei dem der Entladestrom der Induktivität (L) über eine Diode (D) dem Ausgang des Wandlers zugeführt wird, bei dem weiterhin an einem gemeinsamen, mit der Steuereinheit (PFC) verbundenen Messpunkt (PIN 1) gemessen werden

   - bei geöffnetem Schalter (FET), eine Spannung, die direkt der Ausgangsspannung ($V_{BUS}$) des Wandlers entspricht, und
   - bei geschlossenem Schalter (FET) eine Spannung, die indirekt dem Strom ($I_{FET}$) durch den Schalter (FET) entspricht

   bei dem die Zeit ($T_{ON}$) gemessen wird, welche vom Zeitpunkt des Schließens des Schalters (FET) vergeht, bis der Schalterstrom einen vorgegeben Schwellenwert ($I_T$) erreicht hat, und bei dem schließlich die Ausschaltzeit ($T_{OFF}$) für den Schalter (FET) unter Auswertung des Schwellenwertes ($I_T$), der Ausgangsspannung ($V_{BUS}$) und der Einschaltzeit ($T_{ON}$) rechnerisch ermittelt wird.

2. Verfahren nach Anspruch 1, bei dem zunächst die Eingangswechselspannung $V_{IN}$ nach der Formel

$$V_{IN} = L \cdot I_T/T_{ON}$$

   berechnet wird, und bei dann weiterhin die Ausschaltzeit $T_{OFF}$ für den Schalter (FET) nach der Formel

$$T_{OFF} = L \cdot I_T/(V_{BUS}-V_{IN})$$

   berechnet wird.

3. Verfahren nach Anspruch 1 oder 2, bei dem die an dem gemeinsamen Messpunkt (PIN 1) bei geschlossenem Schalter (FET) anliegende Spannung (entspricht $V_{BUS}$) abgetastet wird, bei dem zu jedem Abtastwert anschließend ein von der Amplitude der Eingangsspannung ($V_{IN}$) abhängiger Schwellenwert ($I_T$) in Form einer Spannung hinzuaddiert wird, bei dem die durch die Addition gewonnene Summenspannung mit der an dem gemeinsamen Messpunkt (PIN 1) bei geschlossenem Schalter (FET) anliegende Spannung (entspricht $V_{BUS}$) fortlaufend verglichen wird, und bei dem die Zeit, die vergeht, bis der beiden verglichenen Werte gleich sind, gemessen und als Einschaltzeit ($T_{ON}$) gespeichert und ausgewertet wird.

4. Verfahren nach einem der vorher stehenden Ansprüche, bei dem ein sich aus drei in Serie geschalteten Widerständen (R1, R2, R3) gebildeter Spannungsteiler parallel zum Ausgang der des Wandlers liegt, bei dem der eine Widerstand (R1) - verglichen mit den beiden anderen Widerständen (R2, R3) - sehr klein ist, bei dem der bei geschlossenem Schalter (FET) durch diesen fließende Schalterstrom ($I_{FET}$) durch den sehr kleinen Widerstand (R1) geführt ist, bei dem der gemeinsame Messpunkt (PIN 1) mit dem Verbindungspunkt der beiden anderen Widerstände (R2, R3) des Spannungsteilers verbunden ist oder von dem Verbindungspunkt gebildet ist, bei dem von der bei geschlossenem Schalter (FET) an dem gemeinsamen Messpunkt gemessenen Spannung ($R1 \cdot I_{FET}+V_{BUS}$) die Spannung ($V_{BUS}$) subtrahiert wird, die bei geöffnetem Schalter (FET) an dem gemeinsamen Messpunkt gemessen wird, und bei dem zwecks Überstrom-Überwachung der Schalterstrom ($I_{FET}$) ermittelt wird, indem die zuvor gewonnene Differenzspannung ($R1 \cdot I_{FET}$) durch den Widerstandswert des kleinen Widerstands (R1) dividiert wird.

5. Verfahren nach einem der vorher stehenden Ansprüche, bei dem für die Einschaltzeit ($T_{ON}$) eine Minimalwert ($T_{MIN}$) und für die Ausschaltzeit ($T_{OFF}$) ein Maximalwert ($T_{MAX}$) vorgegeben werden.

6. Verfahren nach einem der Ansprüche 4 oder 5, bei dem die von der Eingangsspannung ($V_{IN}$) abhängigen Schwellenwerte ($I_T$) für den Ladestrom ($I_{FET}$) in einer Tabelle niedergelegt sind,

und bei dem die Tabelle mit der Eingangsspannung ($V_{IN}$) synchronisiert, insbesondere phasensynchronisiert ist.

7. Betriebsgerät für Leuchtmittel, aufweisend eine integrierte Schaltung, insbesondere ASIC, Mikrokontroller oder Hybridtechnik, die zur Ausführung eines Verfahrens nach einem der vorhergehenden Ansprüche ausgelegt ist.

8. Leuchte, aufweisend ein Betriebsgerät nach Anspruch 7 sowie ein oder mehrere angeschlossene Leuchtmittel, wie Gasentladungslampen, LEDs oder OLEDs.

9. Leistungsfaktorkorrektur-Schaltung für einen Wechselspannungs-/Gleichspannungs-Leistungswandler, bei der eine Gleichspannung oder gleichgerichtete Eingangswechselspannung ($V_{IN}$) eine Induktivität (L) speist,

bei der die Induktivität (L) wiederholt mittels eines durch eine Steuereinheit (PFC) getakteten Schalters (FET) durch Schließen und Öffnen desselben ge- und entladen wird,

bei der der Entladestrom der Induktivität (L) über eine Diode (D) dem Ausgang des Wandlers zugeführt wird,

bei der Messmittel vorgesehen sind, mittels welchen an einem gemeinsamen, mit der Steuereinheit (PFC) verbundenen Messpunkt (PIN 1) direkt oder indirekt gemessen werden

     - bei geöffnetem Schalter (FET), eine Spannung, die der Ausgangsspannung ($V_{BUS}$) des Wandlers entspricht, und
     - bei geschlossenem Schalter (FET) eine Spannung, die dem Strom ($I_{FET}$) durch den Schalter (FET) entspricht

bei der Messmittel (2-9) zum Messen der Zeit ($T_{ON}$) vorgesehen sind, welche vom Zeitpunkt des Schließens des Schalters (FET) vergeht, bis der Schalterstrom einen vorgegeben Schwellenwert ($I_T$) erreicht hat, und bei der Rechnermittel vorgesehen sind, mittels welchen die Ausschaltzeit ($T_{OFF}$) für den Schalter (FET) unter Auswertung des Schwellenwertes ($I_T$), der Ausgangsspannung ($V_{BUS}$) und der Einschaltzeit ($T_{ON}$) rechnerisch berechnet wird.

10. Leistungsfaktorkorrektur-Schaltung nach Anspruch 9,

bei der parallel zum Ausgang der Schaltung eine Serienschaltung von mindestens drei Widerständen (R1, R2, R3) liegt, von denen einer (R1) sehr viel kleiner als die anderen (R2, R3) ist,

bei dem der durch den geschlossenen Schalter (FET) fließende Strom ($I_{FET}$) auch durch den kleinen Widerstand (R1) geführt ist,

und bei dem der Verbindungspunkt der anderen beiden Widerstände (R2, R3) mit dem gemeinsamen Messpunkt (PIN 1) verbunden ist oder diesen bildet.

11. Leistungsfaktorkorrektur-Schaltung nach Anspruch 10,

bei der die Diode (D) zwischen der Induktivität (L) und dem Angriffspunkt der Serienschaltung der drei Widerstände (R1, R2, R3) am Hochpotentialpunkt des Ausgangs der Schaltung liegt.

12. Leistungsfaktorkorrektur-Schaltung nach einem der Ansprüche 9 bis 11,

bei dem die Steuereinheit (PFC) als ASIC mit nur einem gemeinsamen Mess-PIN (PIN 1) und nur einem Steuer-PIN (PIN2) ausgeführt ist.

13. Leistungsfaktorkorrektur-Schaltung nach einem der Ansprüche 9 bis 12,

bei dem die Steuereinheit (PFC) enthält:

     eine mit dem gemeinsamen Messpunkt (PIN 1) verbundene Sample&Hold-Schaltung (2),
     einen Addierer (5) der der getasteten Ausgangsspannung der Sample&Hold-Schaltung (2) einen Schwellwert ($I_T$) für den Ladestrom ($I_{FET}$) hinzufügt,
     wobei der Schwellwert ($I_T$) einer in der Steuereinheit (PFC) gespeicherten Tabelle entnommen ist, in der die Schwellwerte ($I_T$) in Abhängigkeit von der Kurvenform der Eingangswechselspannung ($V_{IN}$) aufgelistet sind,
     einen Zeitmesser (7) der mit dem Einschalten des Schalters (FET) zu laufen beginnt,
     und einen Komparator (6), dem die von dem Addierer (6) zugeführte getastete Summenspannung und die an dem gemeinsamen Messpunkt (PIN 1) bei geschlossenem Schalter (FET) anliegende Spannung zugeführt werden,
     wobei der Komparator (6) den Lauf des Zeitmessers (7) stoppt, wenn die an dem gemeinsamen Messpunkt (PIN 1) anliegende Spannung, die während der Ladephase den ansteigenden Ladestrom ($I_{FET}$) repräsentiert, den Schwellenwert ($I_T$) erreicht, wodurch der Zeitmesser (7) die Einschaltzeit ($T_{ON}$) ausgeben kann.

**Claims**

1. Method for power factor correction for an AC voltage/DC voltage transformer where a DC voltage or rectified input AC voltage ($V_{IN}$) loads an inductance (L), where the inductance (L) is repeatedly charged and discharged by means of a switch (FET), clocked by a control unit (PFC), by opening and closing it, where the discharge current of the inductance (L) is carried to the outlet of the transformer via a diode (D), where furthermore at a mutual measuring point (PIN 1) connected with the control unit (PFC) being measured are

- with the switch (FET) open, a voltage that directly corresponds to the output voltage ($V_{BUS}$) of the transformer, and
- with the switch (FET) closed, a voltage that indirectly corresponds to the current ($I_{FET}$) through the switch (FET),

where the time ($T_{ON}$) is being measured that it takes from the time the switch (FET) closes until the switch current has reached a preset threshold value ($I_T$), and where finally the turn-off time ($T_{OFF}$) for the switch (FET) is being determined via calculation by evaluating the threshold value (IT), the output voltage ($V_{BUS}$) and the turn-on time ($T_{ON}$).

2. Method according to claim 1, where firstly the input AC voltage $V_{IN}$ is calculated according to the formula

$$V_{IN} = L \cdot I_T / T_{ON}$$

and then furthermore the turn-off time $T_{OFF}$ for the switch (FET) according to the formula

$$T_{OFF} = L \cdot I_T / (V_{BUS} - V_{IN}).$$

3. Method according to claim 1 or 2, where the voltage (corresponds to $V_{BUS}$) present on the mutual measuring point (PIN 1) with the switch (FET) closed is being scanned, where to each scan result subsequently a threshold value ($I_T$) depending on the amplitude of the input voltage ($V_{IN}$) is added in form of a voltage, where the sum voltage attained by the addition is continuously compared with the voltage (corresponds to $V_{BUS}$) present on the mutual measuring point (PIN 1) with the switch (FET) closed, and where the time going by until the two compared values are equal are measured and stored and evaluated as turn-on time ($T_{ON}$).

4. Method according to one of the preceding claims, where a voltage divider formed by three resistances ($R_1$, $R_2$, $R_3$) connected in series is parallel to the outlet of the transformer, where the one resistance (R1) is - compared with the two other resistances (R2, $R_3$) - very small, where with the switch (FET) closed the switch current ($I_{FET}$) flowing through it is guided through the very small resistance (R1), where the mutual measuring point (PIN 1) is connected with the connection point of the two other resistances (R2,

$R_3$) of the voltage divider or formed by the connection point, where the voltage ($V_{BUS}$) that is measured at the mutual measuring point with the switch (FET) open is subtracted from the voltage ($R1 \cdot I_{FET} + V_{BUS}$) measured on the mutual measuring point with the switch (FET) closed, and where the switch current ($I_{FET}$) is determined for the purpose of overcurrent supervision by dividing the previously attained differential voltage ($R1 \cdot I_{FET}$) by the value of resistance of the small resistance (R1).

5. Method according to one of the preceding claims, where for the turn-on time ($T_{ON}$) a minimal value ($T_{MIN}$) is preset and for the turn-off time ($T_{OFF}$) a maximal value ($T_{MAX}$).

6. Method according to one of the claims 4 or 5, where the threshold values ($I_T$) depending on the input voltage ($V_{IN}$) are stored for the charge current ($I_{FET}$) in a table, and where the table is synchronized with the input voltage ($V_{IN}$), in particular phase-synchronized.

7. Operating device for lighting means, having an integrated circuit, in particular ASIC, micro-controller or hybrid technology, designed for carrying out a method according to one of the preceding claims.

8. Light, having an operating device according to claim 7 as well as one or several connected lighting means, such as gas discharge lamps, LEDs or OLEOs.

9. Power factor correction circuit for an AC/DC power transformer, where a DC voltage or rectified input AC voltage ($V_{IN}$) loads an inductance (L), where the inductance (L) is repeatedly charged and discharged by means of a switch (FET), clocked by a control unit (PFC), by opening and closing it, where the discharge current of the inductance (L) is carried to the outlet of the transformer via a diode (D), where measuring means are provided by means of which being directly or indirectly measured are, at a mutual measuring point (PIN 1) connected with the control unit (PFC)

- with the switch (FET) open, a voltage that corresponds to the output voltage ($V_{BUS}$) of the transformer, and
- with the switch (FET) closed, a voltage that corresponds to the current ($I_{FET}$) through the switch (FET),

where measuring means (2-9) are provided for measuring the time ($T_{ON}$) that it takes from the time the switch (FET) closes until the switch current has reached a preset threshold value ($I_T$), and where calculation means are provided by means of which the turn-off time ($T_{OFF}$) for the switch (FET) is being determined via calculation by evaluating the threshold value ($I_T$), the output voltage ($V_{BUS}$) and the turn-on time ($T_{ON}$).

10. Power factor correction circuit according to claim 9, where parallel to the outlet of the switch a series connection of at least three resistances (R1, R2, R3) is present, of which one (R1) is much smaller than the other ones (R2, R3), where the current ($I_{FET}$) flowing through the closed switch (FET) is also guided through the small resistance (R1), and where the connection point of the other two resistances (R2, R3) is connected with the mutual measuring point (PIN 1) or forms it.

11. Power factor correction circuit according to claim 10, where die diode (D) is located between the inductance (L) and the point of application of the series connection of the three resistances (R1, R2, R3) at the high potential point of the outlet of the circuit.

12. Power factor correction circuit according to one of the claims 9 to 11, where the control unit (PFC) is realized as ASIC with only one mutual measuring PIN (PIN 1) and only one control PIN (PIN2).

13. Power factor correction circuit according to one of the claims 9 to 12, where the control unit (PFC) has:

> a sample and hold circuit (2) connected with the mutual measuring point (PIN 1),
> an adder (5) that adds to the scanned output voltage of the sample and hold circuit (2) a threshold value ($I_T$) for the charge current ($I_{FET}$), wherein the threshold value ($I_T$) is taken from a table stored in the control unit (PFC) in which the threshold values ($I_T$) are listed depending on the wave form of the input AC voltage (VIN),
> a timing device (7) that starts when the switch (FET) is turned on,
> and a comparator (6), to which is fed the scanned sum voltage supplied from the adder (6) and the voltage present on the mutual measuring point (PIN 1) with the switch (FET) closed, wherein the comparator (6) stops the timing device (7) from running when the voltage present on the mutual measuring point (PIN 1) that represents during the charge phase the increasing charge current ($I_{FET}$) reaches the threshold value ($I_T$) as a result of which the timing device (7) can release the turn-on time ($T_{ON}$).

**Revendications**

1. Procédé pour la correction du facteur de puissance pour un transformateur de tension CA en tension CC dans lequel une tension CC ou une tension CA d'entrée rectifiée ($V_{IN}$) charge une inductance (L), où l'inductance (L) est chargée et déchargée de façon répétitive au moyen d'un commutateur (FET), cadencé par une unité de commande (PFC), qui l'ouvre et le ferme, dans lequel le courant de décharge de l'inductance (L) est acheminé vers la sortie du transformateur par une diode (D), où de plus au niveau d'un point de mesure mutuelle (PIN 1) raccordé à l'unité de commande (PFC) sont mesurées,

> - avec le commutateur (FET) ouvert, une tension qui correspond directement à la tension de sortie ($V_{BUS}$) du transformateur, et
> - avec le commutateur (FET) fermé, une tension qui correspond indirectement au courant ($I_{FET}$) à travers le commutateur (FET),

où le temps ($T_{ON}$) mesuré est le temps que met le commutateur (FET) à se fermer jusqu'à ce que le courant de commutation ait atteint une valeur de seuil prédéterminée ($I_T$), et où enfin le temps de déconnexion ($T_{OFF}$) pour le commutateur (FET) est déterminé par un calcul en évaluant la valeur de seuil ($I_T$), la tension de sortie ($V_{BUS}$) et le temps de connexion ($T_{ON}$).

2. Procédé selon la revendication 1, dans lequel tout d'abord la tension CA d'entrée $V_{IN}$ est calculée selon la formule

$$V_{IN} = L{\cdot}I_T/T_{ON}$$

et ensuite en plus le temps de déconnexion $T_{OFF}$ pour le commutateur (FET) est calculé selon la formule

$$T_{OFF} = L{\cdot}I_T/(V_{BUS}\text{-}V_{IN}).$$

3. Procédé selon la revendication 1 ou 2, où la tension (qui correspond à $V_{BUS}$) présente au niveau du point de mesure mutuelle (PIN 1) avec le commutateur (FET) fermé est numérisée, où à chaque résultat de numérisation subséquemment une valeur de seuil ($I_T$) en fonction de l'amplitude de la tension d'entrée ($V_{IN}$) est ajoutée sous la forme d'une tension, où la tension-somme atteinte par l'ajout est constamment comparée à la tension (qui correspond à $V_{BUS}$) présente au niveau du point de mesure mutuelle (PIN 1) avec le commutateur (FET) fermé, et où le temps qui passe jusqu'à ce que les deux valeurs comparées soient égales est mesuré, mémorisé et évalué comme le temps de connexion ($T_{ON}$).

4. Procédé selon l'une quelconque des revendications précédentes, où le diviseur de tension formé par trois

résistances (R$_1$, R$_2$, R$_3$) raccordées en série est parallèle à la sortie du transformateur, où l'une résistance (R1) est - par apport aux deux autres résistances (R2, R$_3$) - très petite, où avec le commutateur (FET) fermé le courant de commutation (I$_{FET}$) passant à travers est guidé à travers la très petite résistance (R1), où le point de mesure mutuelle (PIN 1) est raccordé au point de connexion des deux autres résistances (R2, R$_3$) du diviseur de tension ou formé par le point de connexion, où la tension (V$_{BUS}$) qui est mesurée au niveau du point de mesure mutuelle avec le commutateur (FET) ouvert est soustraite de la tension (R1·I$_{FET}$+V$_{BUS}$) mesurée au niveau du point de mesure mutuelle avec le commutateur (FET) fermé, et où le courant de commutation (I$_{FET}$) est déterminé dans le but de superviser la surintensité en divisant la tension différentielle atteinte précédemment (R1-I$_{FET}$) par la valeur de résistance de la petite résistance (R1).

5. Procédé selon l'une quelconque des revendications précédentes, où pour le temps de connexion (T$_{ON}$) une valeur minimale (T$_{MIN}$) est prédéterminée et pour le temps de déconnexion (T$_{OFF}$) une valeur maximale (T$_{MAX}$) est prédéterminée.

6. Procédé selon l'une quelconque des revendications 4 ou 5, où les valeurs de seuil (I$_T$) en fonction de la tension d'entrée (V$_{IN}$) sont mémorisées pour le courant de charge (I$_{FET}$) dans un tableau, et où le tableau est synchronisé avec la tension d'entrée (V$_{IN}$), en particulier synchronisé en phase.

7. Dispositif opérationnel pour moyen d'éclairage, ayant un circuit intégré, en particulier ASIC, un microcontrôleur ou une technologie hybride, conçus pour réaliser un procédé selon l'une quelconque des revendications précédentes.

8. Lumière, disposant d'un dispositif opérationnel selon la revendication 7 ainsi que d'un ou plusieurs moyens d'éclairage raccordés, comme des lampes à gaz à décharge, des LEDs ou des OLEDs.

9. Circuit de correction du facteur de puissance pour un transformateur de tension CA en tension CC dans lequel une tension CC ou une tension CA d'entrée rectifiée (V$_{IN}$) charge une inductance (L), où l'inductance (L) est chargée et déchargée de façon répétitive au moyen d'un commutateur (FET), cadencé par une unité de commande (PFC), qui l'ouvre et le ferme, dans lequel le courant de décharge de l'inductance (L) est acheminé vers la sortie du transformateur par une diode (D), où est prévu un moyen de mesure, au moyen duquel au niveau d'un point de mesure mutuelle (PIN 1) raccordé à l'unité de commande (PFC) sont mesurées directement et indirectement,

- avec le commutateur (FET) ouvert, une tension qui correspond à la tension de sortie (V$_{BUS}$) du transformateur, et
- avec le commutateur (FET) fermé, une tension qui correspond au courant (V$_{FET}$) à travers le commutateur (FET),

où le moyen de mesure (2-9) est prévu pour mesurer le temps (T$_{ON}$) qu'il met à partir du temps durant lequel le commutateur (FET) se ferme jusqu'à ce que le courant de commutation ait atteint une valeur de seuil prédéterminée (I$_T$), et où le moyen de calcul est fourni au moyen duquel le temps de déconnexion (T$_{OFF}$) pour le commutateur (FET) est déterminé par un calcul en évaluant la valeur de seuil (I$_T$), la tension de sortie (V$_{BUS}$) et le temps de connexion (T$_{ON}$).

10. Circuit de correction du facteur de puissance selon la revendication 9, où se trouve, parallèle à la sortie du circuit, une connexion en série d'au moins trois résistances (R1, R2, R3), dont une (R1) est beaucoup plus petite que les deux autres (R2, R3), où le courant (IFET) passant à travers le commutateur fermé (FET) est également guidé à travers la petite résistance (R1), et où le point de connexion des deux autres résistances (R2, R3) est raccordé au point de mesure mutuelle (PIN 1) ou le forme.

11. Circuit de correction du facteur de puissance selon la revendication 10, où la diode (D) est située entre l'inductance (L) et le point d'application de la connexion en série des trois résistances (R1, R2, R3) au niveau du point de haut potentiel de la sortie du circuit.

12. Circuit de correction du facteur de puissance selon l'une quelconque des revendications 9 à 11, où l'unité de commande (PFC) est réalisée comme ASIC avec uniquement une broche de mesure mutuelle (PIN 1) et uniquement une broche de commande (PIN2).

13. Circuit de correction du facteur de puissance selon l'une quelconque des revendications 9 à 12, où l'unité de commande (PFC) a :

un circuit d'échantillonnage et de maintien (2) raccordé au point de mesure mutuelle (PIN 1), un additionneur (5) qui ajoute à la tension de sortie numérisée du circuit d'échantillonnage et de maintien (2) une valeur de seuil (I$_T$) pour le courant de charge (I$_{FET}$), où la valeur de seuil (I$_T$) est prise dans un tableau mémorisé dans l'unité de commande (PFC) dans lequel les valeurs de seuil (I$_T$) sont énumérées en fonction de la forme d'onde de la tension CA d'entrée (V$_{IN}$), un chronomètre (7) qui démarre lorsque le commutateur (FET) est activé,

et un comparateur (6), auquel est fournie la tension-somme numérisée provenant de l'additionneur (6) et la tension présente au point de mesure mutuelle (PIN 1) avec le commutateur (FET) fermé,

où le comparateur (6) arrête le chronomètre (7) à partir du démarrage lorsque la tension présente au point de mesure mutuelle (PIN 1) qui représente durant la phase de charge le courant de charge croissant ($I_{FET}$) atteint la valeur de seuil ($I_T$) ayant comme conséquence que le chronomètre (7) peut indiquer le temps de connexion ($T_{ON}$).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004025597 A1